# DEMANDE DE BREVET EUROPEEN

(11) **EP 1 953 048 A1**
(43) Date de publication de la demande: **06.08.2008**
(21) Numéro de dépôt: 07002330.4
(22) Date de dépôt: 02.02.2007
(51) Int. Cl.: B60R 25/02

(54) **Dispositif pour le verrouillage d'un arbre de direction d'un véhicule**

(71) Demandeur: Valeo Sicherheitssysteme GmbH, 85253 Erdweg (DE)
(72) Inventeur: Laval, Anthony, 80469 München (DE)
(74) Mandataire: Sties, Jochen

(57) **Abrégé**

Un dispositif (1) pour le verrouillage d'un arbre de direction (3) d'un véhicule, comportant un cadre (12), un pêne (10) déplaçable dans le cadre (12) entre une position de déblocage et une position de verrouillage dans laquelle il coopère avec une pièce (5) à verrouiller associée à un arbre de direction (3), une pièce de blocage (18) déplaçable dans le cadre (12) entre une position initiale et une position de blocage dans laquelle elle coopère avec le pêne (10), un élément de retenue (26) pouvant être enlevé et retenant la pièce de blocage (18) dans la position initiale, et un ressort (30), est caractérisé en ce que le pêne (10) présente un corps de base (10A) avec lequel la pièce de blocage (18) est apte à coopérer, un corps de verrouillage (10B) mobile par rapport au corps de base (10A), et le ressort (30) qui sollicite le corps de verrouillage (10B) par rapport au corps de base (10A) contre la pièce (5) à verrouiller.

## Description

L'invention concerne un dispositif pour le verrouillage d'un arbre de direction d'un véhicule, comportant un cadre, un pêne déplaçable dans le cadre entre une position de déblocage et une position de verrouillage dans laquelle il coopère avec une pièce à verrouiller associée à un arbre de direction, une pièce de blocage déplaçable dans le cadre entre une position initiale et une position de blocage dans laquelle elle coopère avec le pêne, un élément de retenue pouvant être enlevé et retenant la pièce de blocage dans la position initiale, et un ressort.

Le pêne sert à bloquer mécaniquement l'arbre de direction lorsque la clé de contact du véhicule est retirée. Ceci sert d'antivol. La pièce de blocage sert de moyen de sécurité additionnel pouvant bloquer le pêne dans sa position de verrouillage. Ceci augmente la protection contre les vols.

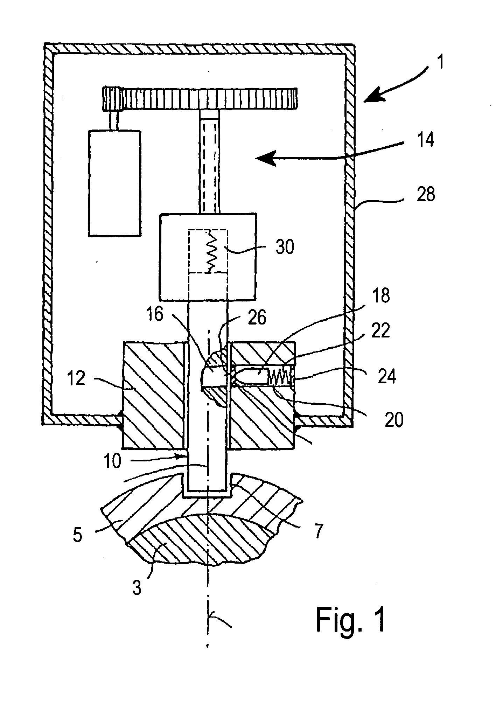

Une conception d'un dispositif de verrouillage connu de l'état de la technique est décrite ci-après à l'aide des figures 1 à 5.

Le dispositif de verrouillage 1 montré à la figure 1 sert à bloquer un arbre de direction 3 de manière mécanique lorsque ceci est nécessaire. Une pièce 5 à verrouiller, réalisée le plus souvent sous forme de douille qui est montée de manière fixe sur l'arbre de direction 3 et est pourvue de plusieurs évidements 7, est associée à l'arbre de direction 3.

Un pêne 10 monté mobile dans un cadre 12 peut s'engager dans les évidements 7. Le cadre 12 est relativement robuste et monté de manière fixe par rapport à l'arbre de direction 3, par exemple sur un support de tableau de bord ou sur un palier de l'arbre de direction.

Le pêne 10 est mobile dans le cadre 12 entre une position de déblocage dans laquelle la pièce 5 à verrouiller peut tourner librement, et une position de verrouillage représentée à la figure 1 et dans laquelle le pêne 10 s'engage dans l'un des évidements 7. Un actionneur 14 esquissé uniquement de manière schématique ici est utilisé pour le déplacement du pêne 10.

Le pêne 10 est pourvu d'un orifice de blocage 16 auquel est associée une pièce de blocage 18. La pièce de blocage 18 est montée mobile dans un guidage 20 formé dans le cadre 12. Un ressort de blocage 22, dont l'extrémité détournée de la pièce de blocage 18 s'appuie sur un couvercle 24, agit sur la pièce de blocage 18. Dans la position initiale montrée à la figure 1, la pièce de blocage 18 est retenue par un élément de retenue 26 qui peut être enlevé et est accouplé à un boîtier 28.

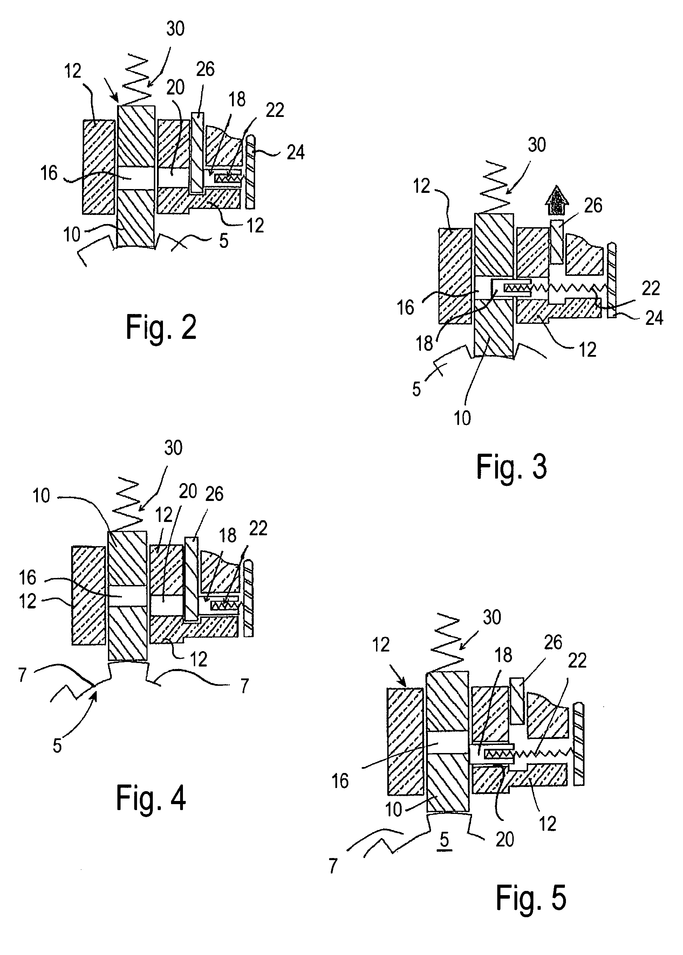

La figure 2 montre à échelle agrandie le dispositif de blocage dans un état dans lequel le pêne est dans la position de verrouillage. On peut voir que l'orifice de blocage 16 dans le pêne 10 se trouve directement en face du guidage 20 dans le cadre 12. Il s'ensuit que le ressort de blocage 22 sollicite la pièce de blocage 18 dans l'orifice de blocage 16 du pêne 10 dès que l'élément de retenue 26 est enlevé (voir figure 3). L'élément de retenue 26 est enlevé du parcours de la pièce de blocage 18 en particulier par l'ouverture forcée du boîtier 28 du dispositif de verrouillage 1. L'ouverture forcée du boîtier 28 provoque en conséquence la retenue mécanique, c'est à dire au moyen de la pièce de blocage 18, du pêne 10 dans sa position de verrouillage de telle sorte qu'il ne peut pas être ramené dans sa position de déblocage par manipulation de l'actionneur 14.

Les figures 4 et 5 montrent le dispositif de verrouillage 1 dans un état dans lequel le pêne 10 occupe une position intermédiaire de verrouillage. Cet état est obtenu dans le cas où le pêne 10 ne s'engage pas dans l'un des évidements 7 de la pièce 5 à verrouiller lorsque l'actionneur 14 doit le déplacer depuis la position de déblocage vers la position de verrouillage, mais atteint seulement la partie élevée se trouvant entre deux évidements 7. Ceci empêche que le pêne 10 ne soit complètement déplacé vers sa position de verrouillage. Par conséquent, l'orifice de blocage 16 du pêne 10 ne se trouve pas en face du guidage 20 réalisé dans le cadre 12. Si, dans cet état, l'élément de retenue 26 est enlevé, le ressort de blocage 22 ne peut pas déplacer la pièce de blocage 18 jusque dans l'orifice de blocage 16 mais seulement vers une position intermédiaire de blocage dans laquelle elle est en appui sur l'extérieur du pêne 10 (voir figure 5). Pour garantir que le pêne 10 soit déplacé de la position intermédiaire de verrouillage montrée vers la position de verrouillage, il est prévu un ressort 30 agissant entre l'actionneur et le pêne 10. Dès que l'arbre de direction, et donc la pièce 5 à verrouiller, est tourné d'une valeur angulaire suffisante, le pêne 10 parvient dans l'un des évidements 7 sous l'effet du ressort 30 de telle sorte que la pièce de blocage 18 peut pénétrer dans l'orifice de blocage 16. Si cependant une rotation correspondante de l'arbre de direction n'a pas lieu, le pêne 10 pourrait être déplacé, par manipulation de l'actionneur 14, depuis la position intermédiaire de verrouillage montrée à la figure 5 pour à nouveau occuper la position de déblocage. Du point de vue de la sécurité, ceci n'est pas satisfaisant.

Le but de l'invention consiste à prévoir un dispositif de verrouillage pour un arbre de direction qui garantit le verrouillage du pêne au moyen de la pièce de blocage indépendamment de la position de rotation de l'arbre de direction.

Pour atteindre ce but, l'invention prévoit que le pêne présente un corps de base avec lequel la pièce de blocage est apte à coopérer, un corps de verrouillage mobile par rapport au corps de base, et le ressort qui sollicite le corps de verrouillage par rapport au corps de base contre la pièce à verrouiller. L'invention repose sur l'idée fondamentale d'ajuster en tous cas l'orifice de blocage de telle sorte que la pièce de blocage puisse s'engager dans celui-ci lorsque l'élément de retenue est enlevé. En termes généraux, ceci est obtenu en réalisant le pêne en deux parties et par le fait que le ressort, qui était prévu entre l'actionneur et le pêne jusqu'à présent, agit maintenant entre les deux parties du pêne. Si le pêne est déplacé par l'actionneur à un moment auquel il n'y a pas d'évidement en face du pêne, le pêne est généralement comprimé en précontraignant le ressort. Ainsi, bien que le corps de verrouillage ne puisse pas être déplacé au maximum et ne se trouve donc pas encore dans la position de verrouillage, le corps de base peut toutefois être amené dans la position de verrouillage dans laquelle l'orifice de blocage se trouve en face du guidage pour la pièce de blocage. Si l'élément de retenue est enlevé dans cet état, la pièce de blocage pénètre dans l'orifice de blocage du pêne de sorte que celui-ci ne peut plus être ramené dans la position de déblocage par une simple manipulation de l'actionneur. Dès que l'arbre de direction a été déplacé d'une valeur angulaire suffisante dans cet état, le corps de verrouillage s'enclenche, sous l'effet du ressort, dans l'évidement le plus proche de la pièce à verrouiller de sorte que l'arbre de direction est verrouillé.

Selon un mode de réalisation de l'invention, il est prévu que le pêne soit reçu de manière mobile dans le cadre, et il est prévu un actionneur pouvant déplacer le pêne entre une position de déblocage et une position de verrouillage. L'avantage de ce mode de réalisation est qu'il est possible d'obtenir avec peu d'efforts constructifs un pêne très robuste et donc résistant. A titre de variante, il est bien sûr en principe également envisageable d'agencer le pêne de manière mobile.

Selon un mode de réalisation de l'invention, il est prévu que le corps de base présente un orifice dans lequel peut s'engager la pièce de blocage. Cette construction permet également d'obtenir, avec peu d'efforts, une stabilité mécanique élevée. L'orifice dans le corps de base permet en particulier que la pièce de blocage soit appliquée sur le corps de base par coopération de formes et puisse le retenir dans la position de verrouillage.

Selon un mode de réalisation de l'invention, il est prévu que la pièce de blocage soit reçue de manière mobile dans le cadre, et il est prévu un ressort de blocage sollicitant la pièce de blocage dans la position de blocage. L'avantage de ce mode de réalisation repose dans l'effort constructif réduit. A titre de variante, il serait en principe également possible que la pièce de blocage soit réalisée sous forme de coin agissant entre le cadre et le corps de base et pouvant ainsi retenir le corps de base dans la position de verrouillage, ou bien sous forme de ressort à branches dont les branches sont appliquées sur le pêne et peuvent le bloquer.

Des réalisations avantageuses de l'invention ressortiront des revendications dépendantes.

L'invention est décrite ci-après à l'aide d'un mode de réalisation représenté dans les dessins annexés, dans lesquels :
- Figure 1 montre une vue schématique d'un dispositif de verrouillage pour un arbre de direction selon l'état de la technique ;
- Figure 2 montre à échelle agrandie un détail de la figure 1, le pêne se trouvant dans la position de verrouillage et la pièce de blocage dans la position initiale ;
- Figure 3 montre le détail de la figure 2, la pièce de blocage se trouvant dans la position de blocage ;
- Figure 4 montre le détail de la figure 2, le pêne se trouvant dans une position intermédiaire de verrouillage;
- Figure 5 montre le détail de la figure 4, la pièce de blocage se trouvant dans une position intermédiaire de blocage ;
- Figure 6 montre dans une vue agrandie un détail d'un dispositif de verrouillage selon l'invention, le pêne se trouvant dans la position de verrouillage et la pièce de blocage dans la position initiale ; et
- Figure 7 montre le système de la figure 6, le corps de verrouillage se trouvant dans une position intermédiaire de verrouillage et la pièce de blocage dans la position initiale.

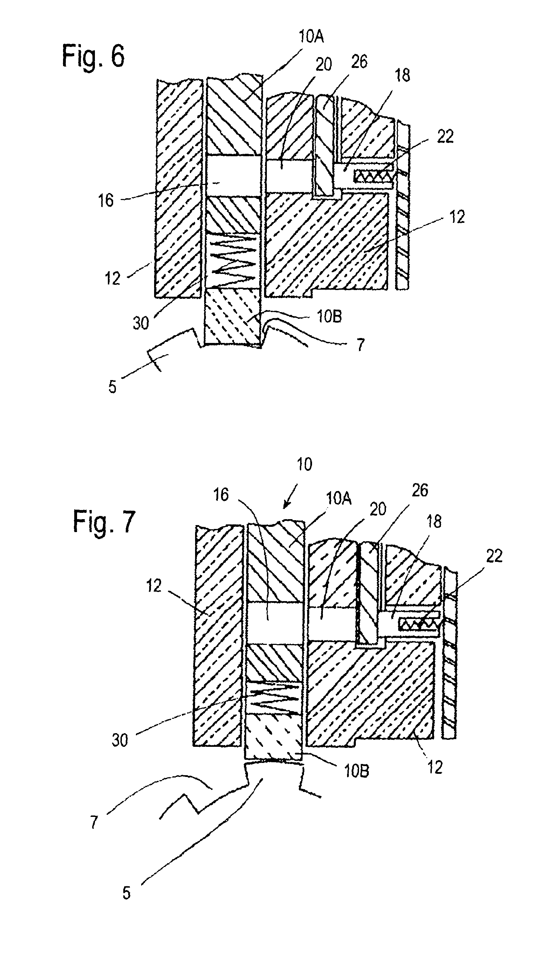

Le dispositif de verrouillage selon l'invention est ci-après décrit à l'aide des figures 6 et 7. En ce qui concerne les composants connus des figures 1 à 5, les mêmes numéros de référence sont utilisés, et nous renvoyons sur ce point aux explications ci-dessus.

Le dispositif de verrouillage selon l'invention se distingue de l'état de la technique par la réalisation du pêne 10 et, en raison de la réalisation différente, également par l'agencement du ressort 30. Comme on peut le voir à la figure 6, le pêne 10 est réalisé en deux parties et composé d'un corps de base 10A et d'un corps de verrouillage 10B. Les deux corps sont mobiles l'un par rapport à l'autre, le ressort 30 agissant entre ces deux corps. Le ressort 30 sollicite le corps de verrouillage 10B de manière à l'éloigner du corps de base 10A et donc de manière à ce que le pêne prenne sa longueur maximale. La manière exacte dont le corps de verrouillage 10B est guidé par rapport au corps de base 10A n'est pas importante pour la compréhension de l'invention et n'est donc pas montrée. Le corps de verrouillage 10B pourrait par exemple être reçu dans le corps de base 10A de manière à être mobile à la façon d'un télescope.

Lorsque le pêne 10 est amené dans la position de verrouillage, alors que l'un des évidements 7 se trouve en face du pêne, l'état montré à la figure 6 est obtenu. L'orifice de blocage 16 formé dans le corps de base 10A est aligné sur le guidage 20 pour la pièce de blocage 18 dans le cadre 12, et le corps de verrouillage 10B s'engage dans l'évidement 7 correspondant. Si, dans cet état, l'élément de retenue 26 est enlevé, la pièce de blocage 18 pénètre dans l'orifice de blocage 16 de sorte que le pêne est généralement bloqué dans la position de verrouillage. Il n'est donc pas possible de ramener le pêne depuis la position de verrouillage dans la position de déblocage par une simple manipulation de l'actionneur 14. L'arbre de direction est bloqué de manière fiable.

Si l'actionneur amène le pêne depuis la position de déblocage vers la position de verrouillage, alors qu'un tronçon élevé entre deux évidements 7 de la pièce 5 à verrouiller se trouve en face du pêne, l'état montré à la figure 7 est obtenu. Dans cet état, le corps de base 10A se trouve, tout comme dans l'état montré à la figure 6, dans la position de verrouillage, alors que le corps de verrouillage 10B n'a pas encore pu prendre sa position de verrouillage. Au lieu de cela, il a été déplacé par rapport au corps de base 10A, et le ressort 30 a été précontraint plus fortement. Si, dans cet état, l'élément de retenue 26 est enlevé, la pièce de blocage 18 pénètre dans l'orifice de blocage 16 dans le corps de base 10A bien que la pièce 5 à verrouiller se trouve dans une position angulaire ne permettant pas encore un verrouillage complet. Dans cet état, il est cependant garantit que le corps de base 10A ne peut pas être ramené dans sa position de déblocage par une simple manipulation de l'actionneur. Au lieu de cela, le corps de verrouillage 10B, sous l'effet du ressort 30, pénétrera dans l'évidement 7 le plus proche et bloquera ainsi l'arbre de direction dès que l'arbre de direction est tourné d'une valeur angulaire suffisante.

### Liste des numéros de référence :

- 1 :: dispositif de verrouillage
- 3 :: arbre de direction
- 5 :: pièce à verrouiller
- 7 :: évidement
- 10:: pêne
- 10A :: corps de base
- 10B :: corps de verrouillage
- 12 :: cadre
- 14 :: actionneur
- 16 :: orifice de blocage
- 18 :: pièce de blocage
- 20 :: guidage
- 22 :: ressort de blocage
- 24 :: couvercle
- 26 :: élément de retenue
- 28:: boîtier
- 30:: ressort

## Revendications

1. Dispositif (1) pour le verrouillage d'un arbre de direction (3) d'un véhicule, comportant un cadre (12), un pêne (10) déplaçable dans le cadre (12) entre une position de déblocage et une position de verrouillage dans laquelle il coopère avec une pièce (5) à verrouiller associée à un arbre de direction (3), une pièce de blocage (18) déplaçable dans le cadre (12) entre une position initiale et une position de blocage dans laquelle elle coopère avec le pêne (10), un élément de retenue (26) pouvant être enlevé et retenant la pièce de blocage (18) dans la position initiale, et un ressort (30), **caractérisé en ce que** le pêne (10) présente un corps de base (10A) avec lequel la pièce de blocage (18) est apte à coopérer, un corps de verrouillage (10B) mobile par rapport au corps de base (10A), et le ressort (30) qui sollicite le corps de verrouillage (10B) par rapport au corps de base (10A) contre la pièce (5) à verrouiller.

2. Dispositif selon la revendication 1, **caractérisé en ce que** le pêne (10) est reçu de manière mobile dans le cadre (12) et **en ce qu'**il est prévu un actionneur (14) pouvant déplacer le pêne (10) entre la position de déblocage et la position de verrouillage.

3. Dispositif selon la revendication 1 ou la revendication 2, **caractérisé en ce que** le corps de base (10A) présente un orifice de blocage (16) dans lequel peut s'engager la pièce de blocage (18).

4. Dispositif selon l'une des revendications précédentes, **caractérisé en ce que** la pièce de blocage (18) est reçue de manière mobile dans le cadre (12) et **en ce qu'**il est prévu un ressort de blocage (22) sollicitant la pièce de blocage (18) dans la positon de blocage.

5. Dispositif selon l'une des revendications précédentes, **caractérisé en ce que** l'élément de retenue (26) est accouplé à un boîtier (28).
